**Europäisches Patentamt**

**European Patent Office**

**Office européen des brevets**

(19)

(11) Veröffentlichungsnummer: **0 026 945**
**B1**

(12) **EUROPÄISCHE PATENTSCHRIFT**

(45) Veröffentlichungstag der Patentschrift:
02.03.83

(51) Int. Cl.³: **E 04 F 17/02**

(21) Anmeldenummer: **80200368.1**

(22) Anmeldetag: **23.04.80**

(54) Verfahren und Vorrichtung zur Innenauskleidung hohler Formstücke.

(30) Priorität: **04.10.79 DE 2940188**

(43) Veröffentlichungstag der Anmeldung:
**15.04.81 Patentblatt 81/15**

(45) Bekanntmachung des Hinweises auf die Patenterteilung:
**02.03.83 Patentblatt 83/9**

(84) Benannte Vertragsstaaten:
**AT BE CH FR GB LI LU NL**

(56) Entgegenhaltungen:
**DE-A-1 509 231**
**DE-A-1 659 703**

(73) Patentinhaber: **Hans Kramer GmbH & Co. KG**
**Dämmstoffwerk, Postfach 130505 Am Trippelsberg 71,**
**D-4000 Düsseldorf 13 (DE)**

(72) Erfinder: **Becker, Dirk, Dr.-Ing., Nikolausstrasse 3,**
**D-4044 Büttgen-Kaarst 2 (DE)**
Erfinder: **Dabrowski, Ralf, Ing.-Grad., Holunderweg 1,**
**D-4010 Hilden (DE)**

(74) Vertreter: **Jahn-Held, Wilhelm W., Dr.Dr.-Ing. Dipl.Chem.,**
**Schöne Aussicht 8, D-3513 Staufenberg 1 (DE)**

## Verfahren und Vorrichtung zur Innenauskleidung hohler Formstücke

Es ist eine Aufgabe der Technik gasführende, thermisch beaufschlagte, hohle Formstücke, insbesondere Schornsteine, gegen Wärmeverluste zu isolieren und einer Materialzerstörung durch thermische Belastung des Innenkörpers und dadurch Gas-Undichtigkeiten entgegenzuwirken.

Das schweizer Patent 443 630 macht einen Schornstein bekannt, dessen äußere Ummantelung aus Asbestzement mit einem wärmeisolierenden Werkstoff innen ausgekleidet ist und der einen damit verbundenen Innenmantel aus hochwertigem Bindeton und aus Schamottezustand enthält.

Der wärmeisolierende Werkstoff soll aus einem gehärteten Mörtel bestehen, der aus Zement mit expandiertem Vermiculit, oder Perlit oder Hollit hergestellt wird.

Zur Herstellung der Schornsteine wird auf einer Grundplatte ein hohler Kernkasten verwendet, an dessen Außenseite Distanzorgane, rings um die aus den Kernelementen aufgebaute Innenform herum, angeordnet sind, die den Abstand zur hohlen Außenform halten, und es wird der Formhohlraum mit einer fließfähigen Masse aus dem wärmeisolierenden Werkstoff gefüllt.

Dieser Schornstein zeigt einen dreischaligen Aufbau, aber der wärmeführende hohle Kasten ist fest mit dem wärmeisolierenden Werkstoff verbunden.

Durch diesen Verbund entsteht der Nachteil, daß bei thermischer Dilatation oder Kontraktion Risse durch unterschiedliche thermische Ausdehnung in den verschiedenen Materialien, insbesondere in der wärmeisolierenden Masse, entstehen, die zum Ablösen und Zerbröckeln führen.

Für diese Schornsteine ist keine bestimmte Zusammensetzung der Wärmedämmschicht vorgeschlagen und auch kein bestimmtes Verhältnis Wasser zu Feststoff. Es wird weder eine bestimmte Rohdichte noch eine Druckfestigkeit und Wärmeleitzahl der Masse der Dämmschicht bei einer bestimmten Anwendungstemperatur als technischer Effekt bekannt.

Die deutsche Auslegeschrift 1 509 231 macht ein Verfahren und eine Vorrichtung zum Auskleiden und Verkleinern des Kaminquerschnittes bekannt.

Es wird eine Mörtelmasse anderer Zusammensetzung zwischen Kern und Kaminwand eingefüllt, die den Querschnitt verkleinert. Diese Mörtelmasse besteht aus sandigen bis körnigen Mineralien mit hydraulischem Bindemittel und wasserabweisenden Zusätzen.

Derartige nicht expandierte Stoffe und hydrophobierende Mittel werden für das Verfahren der Erfindung nicht verwendet.

Diese Druckschrift lehrt auch nicht die Einstellung eines definierten Verhältnisses Wasser : Feststoff und nicht die Einstellung einer definierten Rohdichte und Druckfestigkeit. Die Vorrichtung dieser Druckschrift betrifft nur mehrere zusammengefügte Kerne als Hohlkörper, die nach Beginn des Abbindeprozesses herausgezogen werden.

Die DE-A-1 659 703 betrifft Formsteine, insbesondere für Schornsteine. Der Formstein soll durch gemeinsames Formen des Innen- und des Mantelrohres und gemeinsames Brennen als Verbundstein ausgebildet sein.

Dieser Formstein führt also von der Lehre der Erfindung weg. Es soll gerade kein Ringspalt (5) zwischen Formstück (3) und Innenkern (4) zur Einfüllung einer bestimmten Wärmedämmasse gebildet werden. Es soll lediglich ein wellenartiges Verzahnungsprofil an den Stoßflächen ausgebildet werden. Die Einführung einer Wärmedämmasse ist somit nicht möglich.

Die Erfindung hat sich nun die Aufgabe gestellt, ein Verfahren zu entwickeln, welches die bekannten Nachteile vermeidet, und welches die freie Beweglichkeit eines thermisch beanspruchten hohlen Innenkörpers ermöglicht. Außerdem ist es ein wesentlicher Zweck des Verfahrens der Erfindung, hohle Formstücke, insbesondere Schornsteinmantelsteine, mit einer wärmedämmenden Innenauskleidung herzustellen oder zu versehen, die durch ein definiertes Verhältnis Wasser zu Feststoff eine rasche Anfangsfestigkeit aufweist.

Als hohle Formstücke können auch metallische Rohre verwendet werden.

Ferner soll ein rasches Herausnehmen des Innenkernes nach der Verdichtung der Dämmasse gewährleistet werden. Außerdem soll es durch die Maßnahmen des Verfahrens der Erfindung möglich werden, eine hohe Wärmedämmwirkung mit einer für die Praxis ausreichenden Festigkeit zu verbinden.

Zur Lösung dieser Aufgabe wird eine Dämmasse mit einem Verhältnis Wasser zu Feststoff der Dämmasse von 1,2 bis 2 zu 1 verwendet, die Dämmasse verdichtet und eine Rohdichte von 150 bis 400 g/l und/oder eine Druckfestigkeit von 0,1 bis 1 N/mm² sowie eine Wärmeleitzahl von $\lambda = 0,18$ bis 0,20 W/m · K bei einer Anwendungstemperatur von 800° bis 1000°C eingestellt, der Innenkern nach der Verdichtung herausgezogen und das Formstück bis etwa 48 Stunden unter Verhinderung des Austrocknens gelagert.

Das Verfahren der Erfindung ist im Patentanspruch 1 definiert.

Die Ansprüche 2−16 betreffen die alternative, bevorzugte Ausgestaltung des Verfahrens der Erfindung und die Vorrichtung zu seiner Durchführung.

Die Unteransprüche betreffen die Zusammensetzung der Dämmasse mit expandiertem Vermiculit als Hauptbestandteil, mit anderen mineralischen Nebenbestandteilen und mit einem Anteil an Methylcellulose.

2

Diese betreffen ferner eine vorzugsweise Zusammensetzung des expandierten Vermiculits mit einer bestimmten Konrverteilung im RRS-Diagramm, sowie einen Kornbereich von 0,5 bis 15 mm und einen ähnlichen Bereich der Nebenbestandteile.

Die Ansprüche betreffen außerdem eine bevorzugte Zusammensetzung der Methylcellulose, sowie einen vorzugsweise verwendeten, feinteiligen Portlandzement.

Die Unteransprüche betreffen ferner das Verfahren, demzufolge der offene Formkörper zwischen der äußeren und der inneren Form hergestellt und danach die innere Form herausgezogen wird und daß der Innenumfang des gefertigten Formkörpers mit dem Außenumfang der eingesetzten anderen Form einen vorgegebenen Ringspalt bildet, oder in einen fertigen Formkörper die andere Form eingesetzt wird, die mit dem Innenumfang des Formkörpers einen vorgegebenen Ringspalt bildet, daß eine Bodenplatte angeordnet ist und in den Ringspalt eine schütt- oder fließfähige Dämmasse eingebracht wird.

Als bevorzugte Anwendung betrifft das Verfahren der Erfindung die Herstellung und/oder wärmedämmende Innenauskleidung eines Schornsteinmantelsteines.

Die alternative Ausgestaltung des Verfahrens der Erfindung betrifft auch die Verdichtung der Dämmasse durch axiale oder radiale allseitige Druckanwendung, sowie einen Druck, der die Dämmasse um 5 bis 40% des ursprünglichen Volumens verdichtet, und die Verdichtung der Dämmasse mittels Druckplatten oder Druckhämmer und/oder durch Vibration.

Das Verfahren der Erfindung betrifft auch die radiale Druckanwendung auf bewegliche, rechtwinklige Bleche, die in bezug auf den Formkörper zentriert sind.

Die Vorrichtung zur Durchführung des Verfahrens der Erfindung betrifft die Ausbildung der Bodenplatte mit Zentrierdorn oder Vertiefung zur Fixierung der Form, sowie kreuzförmige Verbindungsbleche.

Die Vorrichtung gemäß der Erfindung betrifft auch die Ausgestaltung der Form mit beweglichen, rechtwinkligen Blechen und aus radial angeordneten Druckstangen, sowie die Form aus metallischem Werkstoff, vorzugsweise aus Edelstahl oder aus Kunststoff. Durch das sehr hohe Wasserrückhaltevermögen des als Hauptbestandteil in der Dämmasse gemäß der Erfindung verwendeten, expandierten Vermiculits wird bei Verwendung des hydraulischen Bindemittels nur teilweise dessen bindende und verfestigende Wirkung ausgenutzt. Bei zu hohem Wasserangebot würde ein ausreichender Verbund der Zementpartikel in der Masse verhindert. Ein zu niedriges Wasserangebot würde zu einer unvollständigen Hydratation des Zementes führen. Diese beiden Einflüsse des Wasserangebotes können gleichzeitig in der Masse an örtlich verschiedenen Punkten eintreten. Durch das von Lamellen des Vermiculitkornes aufgenommene Wasser kommt es für den an diesen Stellen befindlichen Zement zu einem Überangebot von Wasser. Andererseits findet der an der äußeren Oberfläche der Vermiculitteilchen befindliche Zement nur eine ungenügende Menge an Hydratationswasser vor. Das Verfahren der Erfindung gestattet durch die Einstellung eines ausgewählten Verhältnisses Wasser zu Feststoff, vorzugsweise auch in Kombination mit Methylcellulose, die Ausnutzung des Wassers in der Dämmasse optimal zu gestalten und diese Nachteile in dem Mischungsverhältnis zu vermeiden.

Die Komponenten der Dämmasse gemäß der Erfindung sind in der Technik bekannt. Soweit Bimsgranulat als Nebenbestandteil verwendet wird, ist darunter ein hochporöses, vulkanisches Gestein der Korngröße von maximal 0,5 bis 5 mm zu verstehen.

Unter der sich rasch einstellenden Anfangsfestigkeit der verdichteten Dämmasse ist die Festigkeit zu verstehen, die sich innerhalb von 5 min nach der Formgebung noch vor der hydraulischen Abbindung einstellt. Die Wärmedämmwirkung der Dämmasse gemäß der Erfindung wird durch die Wärmeleitzahl $\lambda = W/m \cdot K$ ausgedrückt. Dieser Wert soll bei einer Anwendungstemperatur von 800° bis 1000°C in einem Bereich von $\lambda = 0,18$ bis 0,20 (W/m $\cdot$ K) liegen.

Unter der Rohdichte der Dämmasse gemäß des Verfahrens der Erfindung wird das Gewicht der Dämmasse pro Volumeneinheit im abgerundeten und getrockneten Zustand in g/l verstanden.

Das Verfahren der Erfindung wird durch das folgende Ausführungsbeispiel erläutert. Dieses ist mit der Vorrichtung zu seiner Durchführung auch in den Fig. I bis IV beschrieben.

Es wird der mit der Dämmasse fest zu verbindende Formkörper (3) auf die Bodenplatte (6) mit Zentrierdorn (11) aufgesetzt oder direkt auf dieser gefertigt. Sobald sich nach Einführung der fließfähigen Dämmasse die Anfangsfestigkeit eingestellt hat, wird die Form (2), welche die Innenseite des Formkörpers (3) bildet, herausgezogen. Danach wird die weitere Form (4), vorzugsweise eine aus 4 rechtwinkligen Blechen (4, a, b, c, d), in den Formkörper (3) oder auf den Zentrierdorn (11) und/oder in die für eine Zentrierung vorgesehene Vertiefung (12) der Bodenplatte (6) so eingesetzt, daß sich mit dem Formstück (3) ein Ringspalt (5) bildet.

Die Dämmasse wird mit der erfindungsgemäßen Zusammensetzung in Teilmengen bei gleichzeitiger Verdichtung durch Stampfen und/oder Rütteln in den Ringspalt eingeführt. Diese Maßnahme wird so durchgeführt, daß die vorgegebene Druckfestigkeit erreicht wird.

In einer anderen, beispielsweisen Ausführungsform wird die vorgegebene Dicke der Dämmasse durch Einwirken eines mechanischen, pneumatischen oder hydraulischen Druckes auf die vier Bleche (4, a, b, c, d) erreicht, wodurch der Ringspalt das Einfüllvolumen verändert.

Es ist zweckmäßig durch einen Druckdeckel zu verhindern, daß die Dämmasse im oberen Teil eine geringere Rohdichte oder Festigkeit aufweisen kann.

3

Nach der Beendigung der Einfüllung und Verdichtung der Dämmasse werden die Formen herausgezogen und der Formkörper mit der fest verbundenen Dämmasse 40 Stunden unter Feuchthalten zur Verhinderung des Austrocknens gelagert.

Das Verfahren der Erfindung gestattet die Verdichtung der Dämmasse so durchzuführen, daß bei gleichzeitig guter Wärmedämmwirkung im Anwendungszustand eine Anfangsfestigkeit von mindestens 0,035 N/mm² eingestellt wird.

Es ist überraschend, daß die Aufgabe der Erfindung mit einer Zusammensetzung der Dämmasse erreicht wird, die zu über 65% aus expandiertem Vermiculit besteht und deren Korngrößenverteilung in einem engen, definierten Bereich liegt.

Diese Kornverteilung liegt im Körnungsnetz von Rosin-Rammler-Sperling (RRS) in einem bevorzugten Kornbereich in einem prkatisch geradlinien Verlauf bei einer Neigung entsprechend dem tg des Anstellwinkels von 5 bis ∞.

Im Gegensatz zu den praktischen Gegebenheiten von Betonmischungen erfordert das Verfahren der Erfindung überraschend nicht die dichte Teilchenpackung wie diese in der Praxis normalerweise vorgegeben ist.

Das Verfahren der Erfindung führt mit der folgenden, beispielsweisen Zusammensetzung der Dämmasse zu den darin angegebenen Meßwerten.

## Beispiel 1

| | Gewichtsteile |
|---|---|
| Expandierter Vermiculit gemäß Kornverteilungskurve A | 55 |
| Portlandzement Z 550 | 45 |
| Methylcellulose gemäß Beschreibung | 0,5 |
| Rohdichte $\gamma = 250$ g/l | |
| Anfangsfestigkeit $\sigma_A = 0,048$ N/mm² | |
| Maximalfestigkeit $\sigma_M = 0,38$ N/mm² | |

## Beispiel 2

| | |
|---|---|
| Expandierter Vermiculit gemäß Kornverteilungskurve B | 48 |
| Expandierter Perlit gemäß Kornverteilungskurve C | 7 |
| Portlandzement Z 550 | 45 |
| Methylcellulose | 0,5 |

## Beispiel 3

| | Gewichtsteile |
|---|---|
| Expandierter Vermiculit gemäß Kornverteilungskurve B | 47 |
| Expandierter Perlit gemäß Kornverteilungskurve C | 3 |
| Portlandzement Z 550 | 50 |
| Methylcellulose gemäß Beschreibung | 0,5 |
| Rohdichte $\gamma = 400$ g/l | |
| Anfangsfestigkeit $\sigma_A = 0,07$ N/mm² | |
| Maximalfestigkeit $\sigma_M = 0,75$ N/mm² | |

## Beispiel 4

### Unzureichende Anfangsfestigkeit

| | Gewichtsteile |
|---|---|
| Expandierter Vermiculit Gemäß Kornverteilungskurve D | 48· |

4

Expandierter Perlit
gemäß Kornverteilungskurve E            7
Portlandzement Z 550                 45
Methylcellulose gemäß der Beschreibung      0,5
Rodichte $\gamma = 300$ g/l
Anfangsfestigkeit $\delta_A = 0,015$ N/mm²
Maximalfestigkeit $\sigma_M = 0,36$ N/mm²

Die Maximalfestigkeit ist zugleich die Endfestigkeit nach 28 Tagen nach DIN 1164 (1970). Die Kornverteilungskurven sind in dem Körnungsnetz, Figur V, dargestellt.

Das Verfahren der Erfindung gestattet die Innenauskleidung hohler Formstücke, insbesondere von Schornsteinen unter Verwendung von expandiertem Vermiculit als Hauptbestandteil mit einer kurzzeitigen Einstellung der Anfangsfestigkeit zur raschen Entfernung der Formen und damit zur Erreichung einer großen Durchsatzkapazität und die praktisch vollständige Abbindung der Dämmasse zur Erreichung einer hohen Endfestigkeit.

Die nach dem Verfahren der Erfindung erzeugten Formstücke weisen eine hohe Wärmedämmwirkung bei gleichzeitig ausreichender Festigkeit für Transport, Lagerung und Verwendung der Formstücke auf.

Das Verfahren der Erfindung gestattet bei optimaler Einstellung der Wassermenge im Verhältnis zur Menge des Feststoffes die Einsparung erheblicher Trocknungskosten und eine rasche Benutzung der Formstücke. Dieses bietet den weiteren Vorteil der Einführung innerer, frei beweglicher Formstücke, wodurch ein Zerstören der Dämmasse durch thermische Belastung vermieden wird.

Das Verfahren der Erfindung mit der Vorrichtung zu seiner Durchführung gestattet eine gleichmäßige, axiale oder radiale allseitige Verdichtung der fließfähigen Dämmasse zur Erzielung einer gleichmäßigen Struktur der abbindenden Dämmasse.

Die Vorrichtung gemäß der Erfindung gestattet mit der Formgebung gleichzeitig eine Fixierung der Form durchzuführen zur Herstellung gleichmäßiger Formstücke ohne eine zusätzliche Zentrierung der Form.

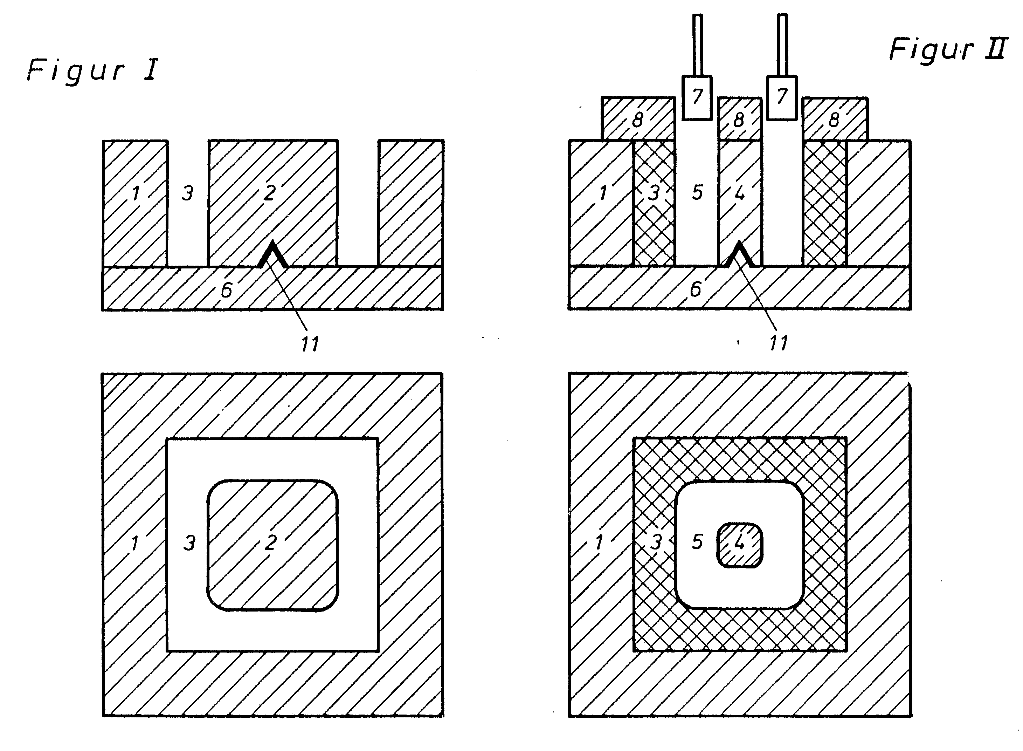

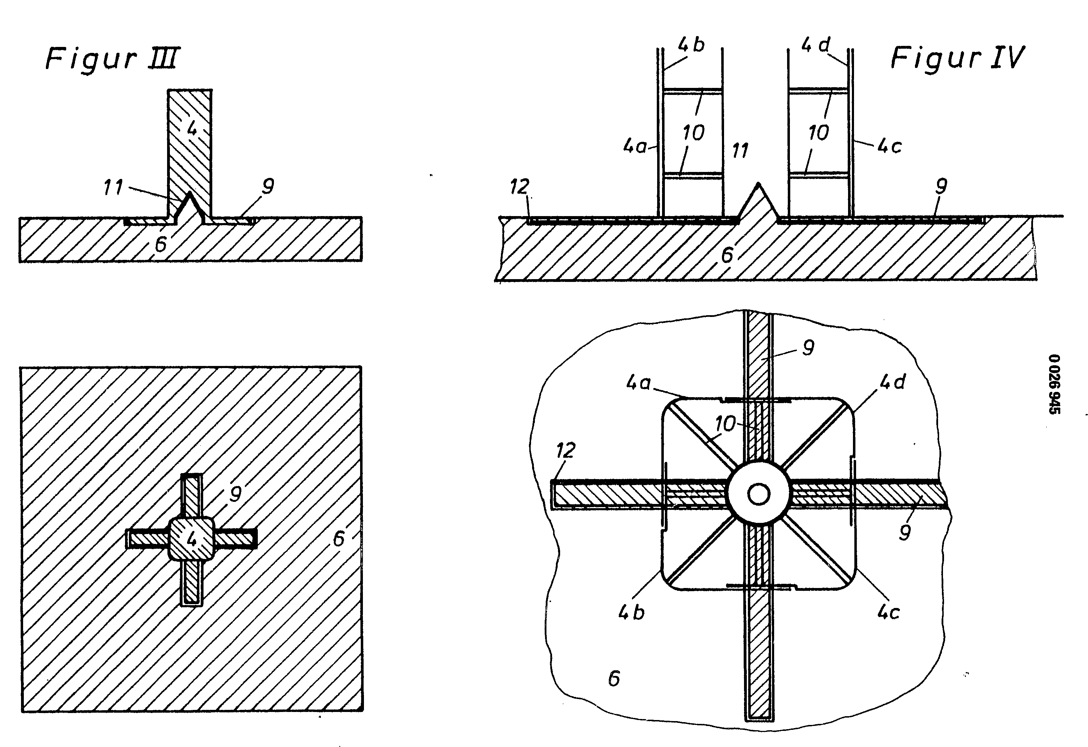

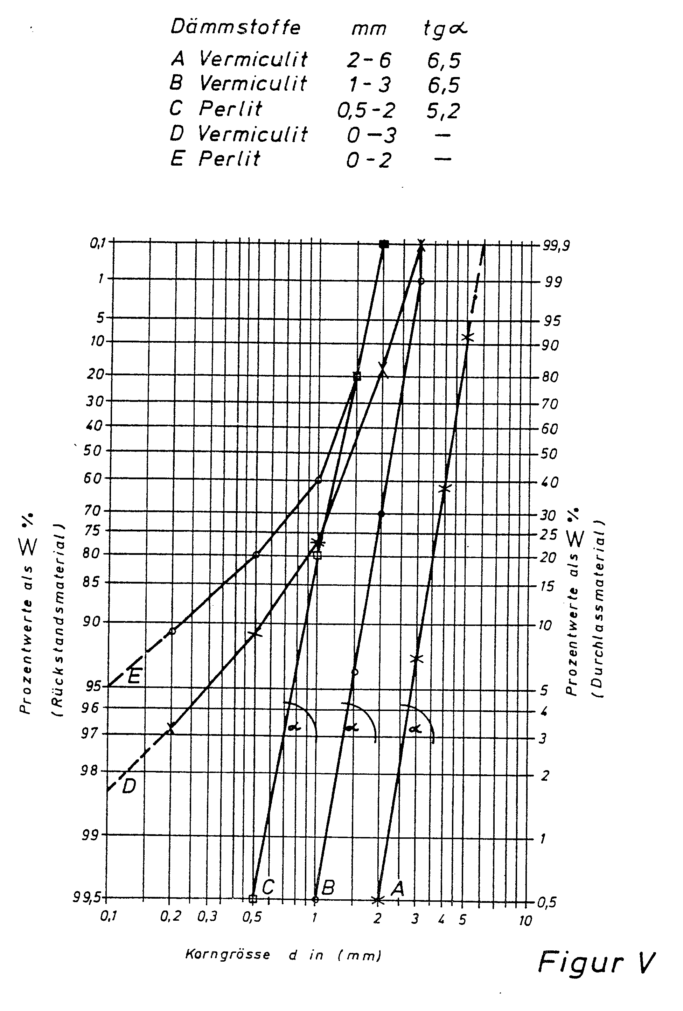

## Patentansprüche

1. Verfahren zur Innenauskleidung von hohlen Formstücken, insbesondere für Schornsteine oder dergleichen mit einer Wärmedämmschicht aus einer Dämmasse in der Hauptsache aus expandiertem Vermiculit und einem hydraulischen Bindemittel bei dem in einem, aus dem Formstück (3) und einem Innenkern (4) gebildeten Ringspalt (5) die Dämmasse eingebracht wird, dadurch gekennzeichnet, daß eine Dämmasse mit einem Verhältnis Wasser zu Feststoff der Dämmasse von 1,2 bis 2 zu 1 verwendet wird, daß die Dämmasse so verdichtet wird, daß sie eine Rohdichte von 150 bis 400 g/l und/oder eine Druckfestigkeit von 0,1 bis 1 N/mm² sowie eine Wärmeleitfähigkeit von $\lambda = 0,18$ bis 0,20 W/m · K bei einer Anwendungstemperatur von 800° bis 1000°C aufweist und daß der Innenkern nach dem Verdichten herausgezogen und das Formstück bis etwa 48 Stunden unter Verhinderung des Austrocknens gelagert wird.

2. Verfahren nach Anspruch 1, dadurch gekennzeichnet, daß als Dämmstoffe der Dämmasse expandierter Vermiculit oder ein Gemisch aus expandiertem Vermiculit als Hauptbestandteil und expandierter Perlit, Bimsgranulat, Blähton, pellierte Mineralfaser und/oder Keramikfaser als Nebenbestandteile und etwa 0,2 bis 2 Gewichtsteile Methylcellulose verwendet werden.

3. Verfahren nach den Ansprüchen 1 oder 2, dadurch gekennzeichnet, daß expandierter Vermiculit mit einer Kornverteilung verwendet wird, die aufgetragen in ein RRS-Diagramm, einen praktisch geradlinigen Verlauf bei einer Neigung tg $\alpha = 5$ bis $\infty$ aufweist, in einer Menge von mindestens 65 Gewichtsteilen des Gesamtdämmstoffes.

4. Verfahren nach den Ansprüchen 1 bis 3, dadurch gekennzeichnet, daß expandierter Vermiculit mit den Korngrenzen 0,5 bis 15 mm verwendet wird und die Nebenbestandteile einen ähnlichen, engen Kornbereich aufweisen.

5. Verfahren nach den Ansprüchen 1 bis 4, dadurch gekennzeichnet, daß Methylcellulose als Komponente der Dämmstoffe verwendet wird, die einen Verätherungsgrad von 1,8 bis 2,0 und eine Viskosität, gemessen mit dem Rotationsviskosimeter, von 7000 bis 10 000 cP in 2prozentiger Lösung bei 20°C aufweist.

6. Verfahren nach den Ansprüchen 1 bis 5, dadurch gekennzeichnet, daß als hydraulisches Bindemittel Portlandzement der Festigkeitsklassen Z 450 oder Z 550 nach den DIN-Normen 1164, Ausgabe Juni 1970, verwendet wird.

7. Verfahren nach den Ansprüchen 1 bis 6, dadurch gekennzeichnet, daß der oben und gegebenenfalls auch unten offene Formkörper (3) zwischen einer äußeren Form (1) und einer inneren Form (2) hergestellt, danach die innere Form (2) herausgezogen und der Innenkern (4) eingesetzt wird, so daß der Innenumfang des gefertigten Formkörpers (3) mit dem Außenumfang des eingesetzten Innenkerns (4) einen vorgegebenen Ringspalt (5) bildet, oder daß in einen fertigen, oben offenen und gegebenenfalls auch unten offenen Formkörper (3) der Innenkern (4) eingesetzt wird, deren Außenumfang mit dem Innenumfang des Formkörpers (3) einen vorgegebenen Ringspalt (5) bildet, wobei eine Bodenplatte (6) unter dem unten offenen Formkörper (3) angeordnet ist und in den Ringspalt eine schütt- oder fließfähige Dämmasse eingebracht wird.

8. Verfahren nach den Ansprüchen 1 bis 7, dadurch gekennzeichnet, daß der unten und oben offene Formkörper (3) ein Schornstein-Mantelstein ist.

9. Verfahren nach den Ansprüchen 1 bis 8, dadurch gekennzeichnet, daß die Verdichtung der Dämmasse durch axiale oder radiale, allseitige Druckanwendung erfolgt.

10. Verfahren nach den Ansprüchen 1 bis 9, dadurch gekennzeichnet, daß die Verdichtung der Dämmasse mit einem solchen Druck erfolgt, daß diese nach der Einführung in den Ringspalt (5) um 5 bis 40% des ursprünglichen Volumens verdichtet wird.

11. Verfahren nach den Ansprüchen 1 bis 10, dadurch gekennzeichnet, daß die Verdichtung der Dämmasse mittels Druckplatten oder Druckhämmer (7) und/oder durch Vibration erfolgt und die Luft durch Öffnungen entweicht.

12. Verfahren nach den Ansprüchen 1 bis 11, dadurch gekennzeichnet, daß die Form (4) durch radiale Druckanwendung auf für sich bewegliche, rechtwinklige Bleche (4, a, b, c, d) in bezug auf den Formkörper (3) zentriert wird und durch weitere radiale Druckanwendung die vorgegebene Verdichtung der Dämmasse erfolgt.

13. Vorrichtung zur Durchführung des Verfahrens nach den Ansprüchen 1 bis 12, dadurch gekennzeichnet, daß die Bodenplatte (6) zur Fixierung des Innenkerns (4) im Innenraum des Formkörpers (3) einen Zentrierdorn (11) und/oder eine Vertiefung (12) aufweist.

14. Vorrichtung nach Anspruch 13, dadurch gekennzeichnet, daß der Innenkern (4) am unteren Ende kreuzförmige Verbindungsbleche (9) aufweist.

15. Vorrichtung nach den Ansprüchen 13 und 14, dadurch gekennzeichnet, daß der Innenkern (4) aus vier, für sich beweglichen, rechtwinkligen Blechen (4, a, b, c, d) und aus radial angeordneten Druckstangen (10) besteht.

16. Vorrichtung nach den Ansprüchen 13 bis 15, dadurch gekennzeichnet, daß der Innenkern (4) aus metallischem Werkstoff wie Edelstahl oder aus Kunststoff besteht.

## Claims

1. Method for lining hollow shaped parts on the interior, in particular for chimneys or suchlike with a thermal insulating layer of an insulating material, principally of expanded vermiculite and a hydraulic binding agent in which the insulating material is introduced in an annular slot (5) formed between the shaped part (3) and an inner core (4), characterised in that an insulating material with a ratio of water to solid matter of the insulating material of between 1.2 and 2 to 1 is used, that the insulating material is condensed such that it has a gross density of 150 to 400 g/l and/or a compression strength of 0.1 to 1 N/mm$^2$ and a coefficient of thermal conductivity of $\lambda = 0.18$ to 0.20 W/m · K at an application temperature of 800° to 1000°C, and that the inner core is removed after consolidation and the shaped part is stored up to approximately 48 hours, with drying out being prevented.

2. Method according to claim 1, characterised in that an insulating substances of the insulating material expanded vermiculite or a mixture of expanded vermiculite as principal constituent and expanded perlite, granulated pumice, expanded clay, chopped mineral fibres and/or ceramic fibres as subsidiary constituents and approximately 0.2 to 2 parts by weight methyl cellulose are used.

3. Method according to claims 1 or 2, characterised in that expanded vermiculite is used with a grain distribution which, illustrated graphically in a RRS-diagram, shows a practically straight-line path at an inclination tg $\alpha = 5$ to $\infty$, in a quantity of of at least 65 parts by weight of the total insulating substance.

4. Method according to claims 1 to 3, characterised in that expanded vermiculite with a grain size range 0.5 to 15 mm is used and the subsidiary constituents have a similar narrow grain range.

5. Method according to claims 1 to 4, characterised in that methyl cellulose is used as a component of the insulating substance, which has a degree of substitution of 1.8 to 2.0 and a viscosity, measured with the rotary viscosimeter, of 7000 to 10 000 cP in 2%-solution at 20°C.

6. Method according to claims 1 to 5, characterised in that as hydraulic binding agent portland cement is used of the strength classifications Z 450 or Z 550 according to the DIN standards 1164, June 1970 edition.

7. Method according to claims 1 to 6, characterised in that the shaped part (3) which is open upward and if required also below, is produced between an outer mould (1) and an inner mould (2), then the inner mould (2) is removed and the inner core (4) is inserted, so that the internal circumference of the finished shaped body (1) forms a specified annular clearance (5) with the outer circumference of the inserted inner core (4), or that the inner core (4) is inserted into a finished shaped body (3), which is open upwards and, if required, also below, its outer circumference forming a specified annular clearance (5) with the inner circumference of the shaped body (3), whereby a base plate (6) is arranged underneath the shaped body (3) if it is open below, and an insulating material, which is able to be poured or to flow, is introduced into the annular clearance.

8. Method according to claims 1 to 7, characterised in that the shaped body (3), open above and below, is a chimney mantle.

9. Method according to claims 1 to 8, characterised in that the consolidation of the insulating material takes place through axial or radial, all-round application of pressure.

10. Method according to claims 1 to 9, characterised in that the consolidation of the insulating material takes place at such a pressure, that after introduction into the annular clearance (5) it is consolidated by 5 to 40% of the original volume.

11. Method according to claims 1 to 10, characterised in that the consolidation of the insulating material takes place by means of pressure plates or pressure hammers (7) and/or through vibration, and the air escapes through openings.

12. Method according to claims 1 to 11, characterised in that the mould (4) is centered in relation to the shaped body (3), through radial application of pressure onto rectangular sheets (4, a, b, c, d), which are movable independently, and the specified consolidation of the insulating material takes place through further radial application of pressure.

13. Device to carry out the method according to claims 1 to 12, characterised in that the base plate (6), to fix the inner core (4) in the interior of the shaped body (3), has a centering peg (11) and/or a recess (12).

14. Device according to claim 13, characterised in that the inner core (4) has cruciform connecting sheets (9) at the lower end.

15. Device according to claims 13 and 14, characterised in that the inner core (4) consists of four rectangular sheets (4, a, b, c, d), which are movable independently, and radially arranged pressing rods (10).

16. Device according to claims 13 to 15, characterised in that the inner core (4) consists of metallic material such as high-grade steel or of synthetic plastics material.

**Revendications**

1. Procédé de revêtement intérieur de pièces moulées creuses, notamment pour des cheminées ou éléments semblables, ayant une couche calorifuge en une masse calorifuge principalement en vermiculite expansée et en un liant hydraulique, suivant lequel on met la masse calorifuge dans un intervalle (5) annulaire formé de la pièce (3) moulée et d'une âme (4) intérieure, caractérisé en ce qu'il consiste à utiliser une masse calorifuge ayant un rapport eau à matière solide de 1,2 à 2, à comprimer la masse calorifuge de manière à ce qu'elle ait une masse volumique apparente de 150 à 400 grammes/litre et/ou une résistance à la compression de 0,1 à 1 N/mm², ainsi qu'un indice de conduction calorifique de $\lambda = 0,18$ à 0,20 W/m · K pour une température d'utilisation de 800° à 1100°C et à enlever l'âme intérieure, après la compression, et à stocker la pièce moulée jusque pendant 48 heures environ en en empêchant le dessèchement.

2. Procédé suivant la revendication 1, caractérisé en ce qu'il consiste à utiliser comme substance calorifuge de la masse calorifuge, de la vermiculite expansée ou un mélange de vermiculite expansée comme constituant principal et de perlite expansée de grains de pierre ponce, d'argile expansée, de fibres minérales en boulettes et/ou de fibres céramiques comme constituants secondaires, et de 0,2 à 2% parties en poids environ de méthylcellulose.

3. Procédé suivant les revendications 1 ou 2, caractérisé en ce qu'il consiste à utiliser de la vermiculite expansée ayant une granulométrie qui, portée dans un graphique RRS, présente une courbe pratiquement rectiligne pour une pente tg $\alpha = 5$ à $\infty$, en une quantité d'au moins 6 parties en poids de la substance calorifuge totale.

4. Procédé suivant les revendications 1 à 3, caractérisé en ce qu'il consiste à utiliser de la vermiculite expansée ayant des limites de granulométrie de 0,5 à 15 mm, et les constituants secondaires présentent une plage granulométrique étroite semblable.

5. Procédé suivant les revendications 1 à 4, caractérisé en ce qu'il consiste à utiliser comme constituants de la substance calorifuge de la méthylcellulose qui présente un indice d'éthérification de 1,8 à 2,0 et une viscosité mesurée au viscosimètre rotatif de 7.000 à 10.000 cP en solution à 2% à 20°C.

6. Procédé suivant les revendications 1 à 5, caractérisé en ce qu'il consiste à utiliser comme liants hydrauliques du ciment de Portland des classes de résistance Z 450 ou Z 550, suivant les normes DIN-1164, édition de juin 1970.

7. Procédé suivant les revendications 1 à 6, caractérisé en ce qu'il consiste à fabriquer le corps (3) moulé ouvert vers le haut et, le cas échéant, aussi vers le bas, entre un moule (1) extérieur et un moule (2) intérieur, puis à enlever le moule (2) intérieur, et à mettre l'âme (4) intérieure de manière à ce que le pourtour inférieur du corps (3) moulé fini forme, avec le pourtour extérieur de l'âme (4) intérieure introduite un intervalle (5) annulaire donné à l'avance, ou à introduire, dans un corps (3) moulé ouvert vers le haut et, le cas échéant, aussi vers le bas, l'âme (4) intérieure dont le pourtour extérieur forme, avec le pourtour intérieur du corps (3) moulé un intervalle (5) annulaire donné à l'avance, une plaque (6) de fond étant disposée sous le corps (3) moulé ouvert vers le bas, et une masse calorifuge en vrac ou apte à s'écouler étant introduite dans l'espace annulaire.

8. Procédé suivant les revendications 1 à 7, caractérisé en ce que le corps (3) moulé ouvert vers le bas et vers le haut est une brique de revêtement d'un conduit de cheminée.

9. Procédé suivant les revendications 1 à 8, caractérisé en ce qu'il consiste à effectuer la compression de masse calorifuge par utilisation d'une pression dans toutes les directions axiales ou radiales.

10. Procédé suivant les revendications 1 à 9, caractérisé en ce qu'il consiste à effectuer la compression par masse calorifuge sous une pression telle que cette masse se comprime de 5 à 40% du volume initial.

11. Procédé suivant les revendications 1 à 10, caractérisé en ce qu'il consiste à effectuer la compression de la masse calorifuge à l'aide de plaques de pression ou de marteaux (7) de pression et/ou par vibrations et à faire se dégager l'air par des ouvertures.

12. Procédé suivant les revendications 1 à 11, caractérisé en ce qu'il consiste à centrer le moule (4) par rapport au corps (3) moulé, par utilisation de pressions radiales sur des tôles 4, a, b, c, d) coudées mobiles en elles-mêmes, et à effectuer la compression prescrite de la masse calorifuge par une autre utilisation de pressions radiales.

13. Dispositif pour exécuter le procédé suivant les revendications 1 à 12, caractérisé en ce que la plaque (6) de fond pour la fixation de l'âme (4) intérieure, dans l'espace intérieur du corps (3) moulé, présente une broche (11) de centrage et/ou une cavité (12).

14. Dispositif suivant la revendication 13, caractérisé en ce que l'âme (4) intérieure présente à l'extrémité inférieure une tôle de liaison en forme de croix.

15. Dispositif suivant les revendications 13 et 14, caractérisé en ce que l'âme (4) intérieure est constituée de quatre tôles (4, a, b, c, d) coudées mobiles en elles-mêmes, et de barres (10) de compression radiales.

16. Dispositif suivant les revendications 13 à 15, caractérisé en ce que l'âme (4) intérieure est en un matériau métallique comme de l'acier spécial ou en matière plastique.

0 026 945

Figur IV

Figur III

| Dämmstoffe | | mm | tgα |
|---|---|---|---|
| A | Vermiculit | 2 − 6 | 6,5 |
| B | Vermiculit | 1 − 3 | 6,5 |
| C | Perlit | 0,5 − 2 | 5,2 |
| D | Vermiculit | 0 − 3 | — |
| E | Perlit | 0 − 2 | — |

Figur V